# EUROPÄISCHE PATENTSCHRIFT

(11) **EP 3 095 154 B1**
(45) Veröffentlichungstag und Bekanntmachung des Hinweises auf die Patenterteilung: **16.03.2022**
(21) Anmeldenummer: 15701133.9
(22) Anmeldetag: 16.01.2015
(51) Int. Cl.: H01Q 1/12, H01Q 1/32, B60R 11/00

(54) **BEFESTIGUNG EINER DACHANTENNE AN EINEM KAROSSERIEDACH**
FASTENING A ROOF ANTENNA TO A BODY TOP
FIXATION D'UNE ANTENNE DE TOIT SUR UN TOIT DE CARROSSERIE

(30) Priorität: 17.01.2014 DE 102014200853
(43) Veröffentlichungstag der Anmeldung: 23.11.2016
(73) Patentinhaber: Hirschmann Car Communication GmbH, 72654 Neckartenzlingen (DE)
(72) Erfinder: SILVA, David, 72622 Nürtingen (DE)
(74) Vertreter: Patentanwaltskanzlei WILHELM & BECK
(86) Internationale Anmeldenummer: PCT/EP2015/050755
(87) Internationale Veröffentlichungsnummer: WO 2015/107146

(56) Entgegenhaltungen:
- WO-A1-2013/183756
- DE-U1-202007 013 842
- US-A1- 2008 131 199
- US-A1- 2011 267 243

## Beschreibung

Die Erfindung betrifft eine Dachantenne mit einer Bodenplatte und einer Außenhaube zur Anordnung auf einem Dach eines Fahrzeuges, wobei die Dachantenne einen Befestigungsmechanismus aufweist, der eine Befestigungsschraube und eine damit zusammenwirkende Befestigungskralle umfasst, gemäß den Merkmalen des Oberbegriffes des Patentanspruches 1.

Solche gattungsgemäßen Dachantennen, die auf einem Dach eines Fahrzeuges angeordnet und festgelegt werden, sind bekannt. Mit der Befestigungskralle wird sichergestellt, dass die Dachantenne auf das Dach aufgesetzt wird und in einer Vorverrastposition auf dem Dach angeordnet wird. Hierzu wird die Dachantenne mit einem Teilbereich des Befestigungsmechanismus durch eine Öffnung in dem Dach hindurchgeführt, sodass eine Bodenplatte der Dachantenne planparallel mit oder ohne Abstand auf dem Dach zur Anlage kommt. Danach kann von dem Innenraum des Fahrzeuges die Befestigungsschraube betätigt werden, um die Dachantenne in ihrer endgültigen Position auf dem Dach des Fahrzeuges anzuordnen und unverrückbar festzulegen.

Die US2011267243, DE202007013842U, WO2013183756 beschreiben Befestigungseinrichtungen für eine Fahrzeugantenne.

Die US 2008/0131199 A1 beschreibt eine Befestigungsvorrichtung für eine Dachantenne mit einem Befestigungselement, das mittels einer Schraube mit Spannung beaufschlagt werden kann.

Der Erfindung liegt die Aufgabe zugrunde, eine Dachantenne für die Anordnung auf einem Dach eines Fahrzeuges bereitzustellen, die hinsichtlich ihrer Montage gegenüber bekannten Dachantennen weiter verbessert ist.

Diese Aufgabe ist durch die Merkmale des Patentanspruches 1 gelöst.

Erfindungsgemäß bildet die Bodenplatte der Dachantenne einen Gegenhalter, an dem die Befestigungskralle festgelegt ist, wobei die Befestigungskralle einen Aufnahmebereich für die Befestigungsschraube bildet, der vor dem Einsetzen der Befestigungsschraube frei ist und nach dem Einsetzen der Befestigungsschraube von dieser ausgefüllt ist.

Aufgrund dieser geometrischen und konstruktiven Ausgestaltung wird zunächst der Vorteil beibehalten, dass die Dachantenne mit einem Teil des Befestigungsbereiches von oben durch eine Öffnung in dem Dach auf diesem angeordnet und in einer Vorverrastposition mittels der Befestigungskralle festgelegt werden kann. Nachdem dies erfolgt ist, kann die Dachantenne durch Betätigung der Befestigungsschraube endgültig unverrückbar auf dem Dach des Fahrzeuges festgelegt werden. Hierzu wird in vorteilhafter Weise die Befestigungsschraube mit dem Gegenhalter in Wirkverbindung gebracht. Dadurch, dass die Befestigungsschraube zunächst den Aufnahmebereich der Befestigungskralle noch nicht ausfüllt, ist es möglich, dass die Befestigungskralle beim Durchführen durch die Öffnung in dem Dach zusammengedrückt und anschließend aufgeweitet wird. Dabei hintergreift die Befestigungskralle die Unterseite des Daches, sodass dadurch die Dachantenne vorverrastet ist. Erst jetzt ist es möglich, die Befestigungsschraube in Wirkverbindung mit dem Gegenhalter der Bodenplatte zu bringen, sodass dadurch von der Befestigungsschraube der Aufnahmebereich in der Befestigungskralle ausgefüllt wird. Dies hat zweierlei Vorteile, nämlich zum einen wird durch die Wirkverbindung zwischen Gegenhalter und Befestigungsschraube die Dachantenne auf dem Dach festgelegt und zum anderen vermieden, dass sich die Befestigungskralle wieder zusammendrücken lässt, um zu vermeiden, dass sich die Dachantenne aus ihrer einmal unverrückbar eingenommenen Position auf dem Dach wieder lösen kann. Von besonderem Vorteil ist es, wenn die Befestigungsschraube ein Außengewinde und einen Schraubenkopf aufweist, wobei der Schraubenkopf mit einem Teilbereich oder vollständig den Aufnahmebereich der Befestigungskralle ausfüllt. Der Gegenhalter der Bodenplatte weist ein mit den Außengewinde der Befestigungsschraube korrespondierendes Innengewinde auf, sodass durch diese Schraubverbindung die Befestigungsschraube schnell, einfach und unkompliziert in den Gegenhalter eingeschraubt werden kann und dabei gleichzeitig die Befestigungskralle in ihrem endgültigen Sitz an der Unterseite des Daches und dem Gegenhalter festlegt.

In Weiterbildung der Erfindung weist die Befestigungskralle an einem offenen Ende des Aufnahmebereiches zumindest einen Rasthaken, vorzugsweise zwei gegenüberliegend angeordnete Rasthaken auf. Mit dem zumindest einen Rasthaken wird sichergestellt, dass die Dachantenne in einer Vorverrastposition in Bezug auf das Dach festgelegt ist, wenn die Befestigungskralle durch die Öffnung des Daches durchgeführt worden ist und der zumindest eine Rasthaken die Dachantenne daran hindert, wieder aus der Öffnung herausgezogen zu werden. Außerdem hat der zumindest eine Rasthaken dann eine elektrische Funktion, wenn sowohl das Dach als auch die Befestigungskralle mit dem zumindest einen Rasthaken aus einem metallischen Werkstoff bestehen. Durch die Wirkverbindung von Befestigungsschraube und Gegenhalter an der Bodenplatte, insbesondere durch das Einschrauben der Befestigungsschraube in den Gegenhalter mit Gewinde wird der zumindest eine Rasthaken gegen die Unterseite des Daches gedrückt und kommt dabei zur Anlage an die Unterseite des Daches, wodurch ein elektrischer Kontakt entsteht. Für den Fall, dass die Unterseite des Daches mit einem Überzug, zum Beispiel Farbe, versehen ist, wird durch die Wirkverbindung von Befestigungsschraube und Gegenhalter der zumindest eine Rasthaken relativ zu der Unterseite bewegt, wodurch der Überzug entfernt und ein direkter metallischer und damit elektrischer Kontakt hergestellt wird. Ein solcher Kontakt wird beispielsweise für eine Masseanbindung zwecks Abschirmung der Dachantenne benötigt.

In Weiterbildung der Erfindung bildet der Gegenhalter der Bodenplatte einen Freiraum zur Aufnahme eines Teiles der Befestigungskralle. Wird die Befestigungsschraube in Wirkverbindung mit dem Gegenhalter gebracht (insbesondere wird die Befestigungsschraube in den Gegenhalter eingeschraubt), wird dadurch ein Teilbereich der Befestigungskralle verformt, wobei insbesondere der verformte Bereich der Befestigungskralle in dem Freiraum des Gegenhalters Platz hat, um sich auszudehnen. Dies hat den besonderen Vorteil, dass dadurch die axiale Erstreckung der Befestigungskralle, insbesondere die axiale Erstreckung zwischen der Anlagefläche des zumindest einen Rasthakens an der Unterseite des Daches und dem Ende der Befestigungskralle, mit dem sie an dem Gegenhalter befestigt ist, sich verändern kann, um unterschiedliche Dicken des Daches ausgleichen zu können. Damit steht eine variabel einzusetzende Dachantenne zur Verfügung, die mit dem erfindungsgemäßen Befestigungsmechanismus auf unterschiedlichen Dächern (egal ob aus einem metallischen oder einem nicht-metallischen Werkstoff) eingesetzt werden kann.

Weitere Vorteile:
- Einfache Montage und Demontage
- Vibrationsschutz vorhanden
- Für Wandstärken (Blechdicken von 0,5 bis 2,0 Millimetern geeignet
- Masseanbindung zur Karosserie vorhanden
- Befestigungsschraube verliersicher angebracht

Weitere wesentliche Ausgestaltungen der erfindungsgemäßen Dachantenne mit ihrem vorteilhaften Befestigungsmechanismus sowie ein besonders vorteilhaftes Verfahren zur Montage einer solchen Dachantenne auf einem Dach eines Fahrzeuges sind im folgenden näher erläutert und mit Blick auf die Figuren beschrieben.

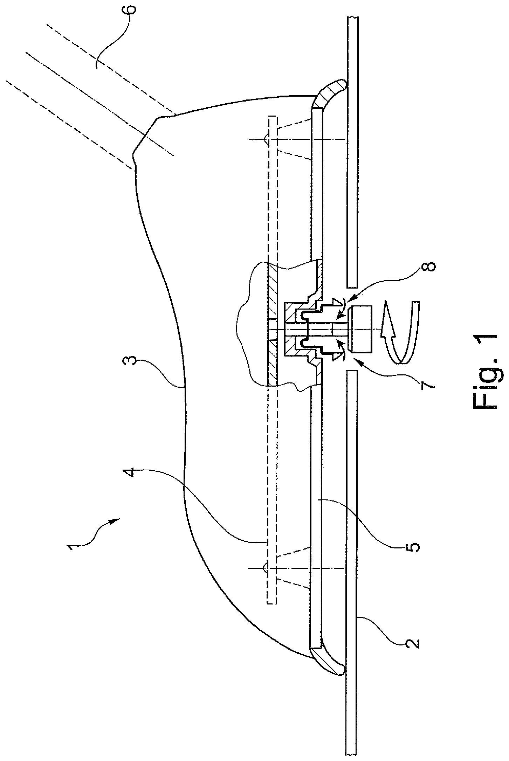

Figur 1 zeigt, sowie im Einzelnen dargestellt, eine Antennenanordnung eines Fahrzeuges. Eine Dachantenne mit der Bezugsziffer 1 wird auf einem Dach 2 des nicht näher dargestellten Fahrzeuges 2 angeordnet und festgelegt. Die Dachantenne 1 weist beispielsweise in üblicher Form eine Außenhaube 3 auf, wobei unterhalb der Außenhaube 3 eine Leiterplatte 4 angeordnet ist. Nicht dargestellt sind die in üblicher Weise vorhandenen Antennenelemente zum Senden und/oder Empfangen hochfrequenter Signale, wie zum Beispiel für Telefon, Radio, Fernsehen, GPS und dergleichen. Die Leiterplatte 4 ist auf Abstand zu einer Bodenplatte 5 der Dachantenne 1 gezeigt. Gegebenenfalls kann, muss aber nicht, eine Antennenrute 6 mit einem weiteren Antennenelement (Stabantenne) vorhanden sein. Die Antennenanordnung umfasst weiterhin eine Öffnung 7 in dem Dach 2 sowie einen Befestigungsmechanismus 8, der, wie im Folgenden noch zu beschreiben sein wird, eine Befestigungsschraube und eine Befestigungskralle umfasst.

Der in Figur 1 gezeigte Aufbau der Antennenanordnung mit der Dachantenne 1 ist beispielhaft. Insbesondere ist der dargestellte innere Aufbau der Dachantenne unterhalb der Außenhaube 3 beispielhaft und kann variieren.

In den Figuren 2 bis 6 ist das Verfahren zur Montage der Dachantenne 1 auf dem Dach 2 in einzelnen Schritten gezeigt. Dabei ist die Dachantenne 1 gemäß Figur 1 in den folgenden Figuren 2 bis 6 ausschnittsweise in den Bereichen um den Befestigungsmechanismus 8 einschließlich der diesen Bereich umgebenden Bereiche der Bodenplatte 5 und der Leiterplatte 4 dargestellt.

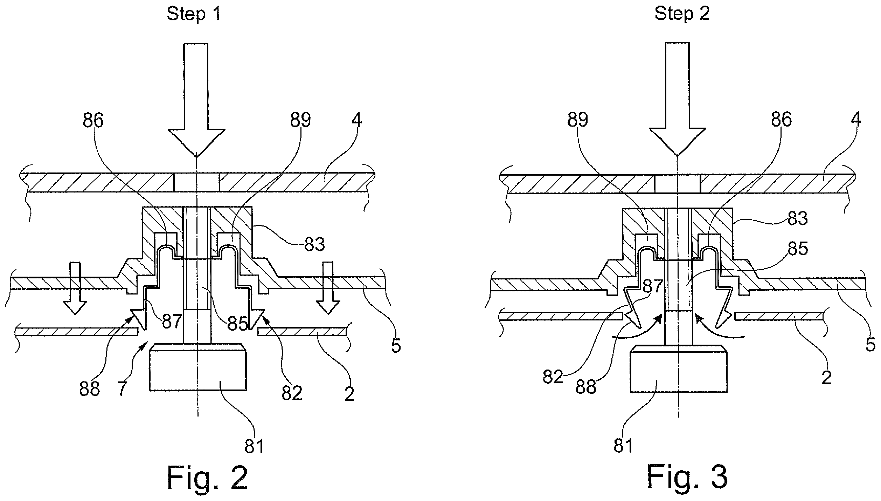

Figur 2 zeigt den ersten Montageschritt, bei der das Dach 2 die Öffnung 7 aufweist und die Dachantenne 1 dazu vorbereitet ist, die Befestigungskralle 2, die verliersicher an der Bodenplatte 5 angeordnet ist, durch die Öffnung 7 durchzuführen. Auf die Einzelheiten der speziellen Ausgestaltung der Befestigungsschraube 81, der Befestigungskralle 82 und der Bodenplatte 5 wird im Folgenden zur Beschreibung ihrer jeweiligen Funktion näher eingegangen.

In Figur 3 ist der nächste Schritt gezeigt, bei dem die Befestigungskralle 82 durch die Öffnung 7 durchgeführt wird. Dabei wird der zumindest eine Rasthaken 88, hier die beiden gegenüberliegend angeordneten Rasthaken 88, in der dargestellten Pfeilrichtung zusammengedrückt. In diesem Zustand ist es nicht möglich, dass die Befestigungsschraube 81, genauer deren Schraubenkopf, einen Aufnahmebereich 87 der Befestigungskralle 82 ausfüllt.

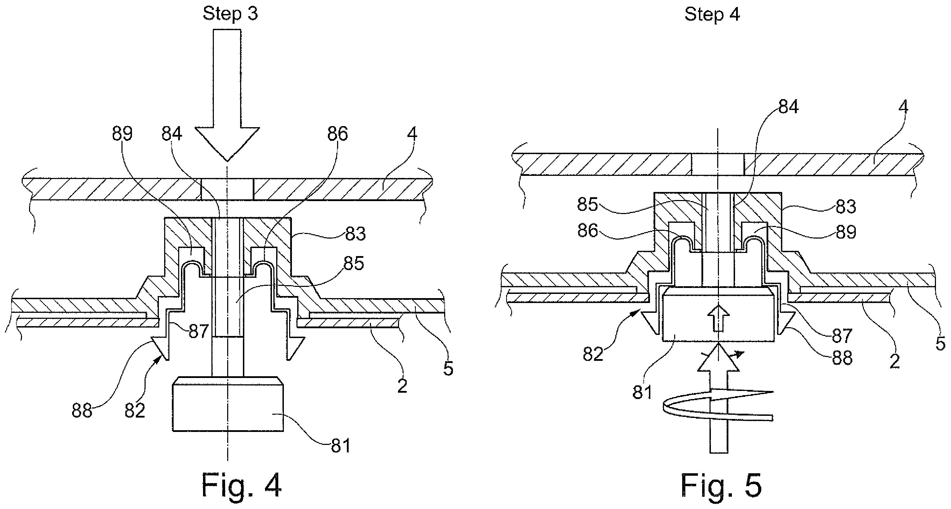

Figur 4 zeigt den nächsten Schritt, nämlich dass die Befestigungskralle soweit durch die Öffnung 7 durchgeführt wurde, dass sich die Enden der Befestigungskralle 82 mit den Rasthaken wieder aufweiten und quasi den Aufnahmebereich 87 für den Kopf der Befestigungsschraube freigeben. Dabei ist die planparallele Oberfläche der Rasthaken 88 auf Abstand zu der Unterseite des Daches 2 ausgerichtet. Es ist auch denkbar, dass die Unterseite des Daches 2 schon in Anlage kommt mit der korrespondierenden Fläche der Rasthaken 88. In diesem Zustand ist es möglich, die Befestigungsschraube 81 schon in Wirkverbindung zu bringen mit der Bodenplatte 5, was jedoch in diesem Montageschritt noch nicht der Fall ist.

In Figur 5 ist gezeigt, dass aufgrund der Freigabe des Aufnahmebereiches 87 der Befestigungskralle 82 es möglich ist, die Befestigungsschraube 81 in Wirkverbindung zu bringen mit der Bodenplatte 5. Dieses Verbringen kann durch eine Schraubverbindung, wie im Folgenden erläutert wird, erfolgen. Es ist allerdings auch denkbar, dass andere Verbindungsmöglichkeiten, wie zum Beispiel Rast-, Schnapp- oder Einpressverbindungen oder dergleichen in Betracht kommen können.

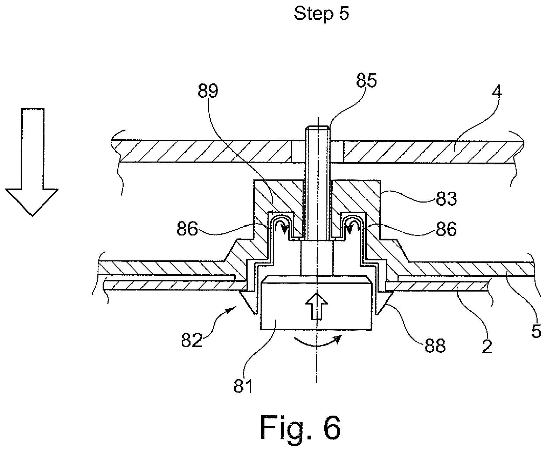

Gemäß dem Ausführungsbeispiel, welches in den Figuren 2 bis 6 gezeigt ist, wird die Befestigungsschraube 81 wie folgt in Wirkverbindung mit der Bodenplatte 5 gebracht. Die Bodenplatte 5 weist einen Gegenhalter 83 auf, der ein Innengewinde 84 aufweist. Korrespondieren zu dem Innengewinde 84 weist die Befestigungsschraube 81 ausgehend von ihrem nicht näher bezeichneten Schraubenkopf ein Außengewinde 85 auf. Wie in Figur 5 erkennbar ist, kann durch die Freigabe des Aufnahmebereiches 87 der Befestigungskralle 82 die Befestigungsschraube 81 mit ihrem Innengewinde 84 in das Außengewinde 85 des Gegenhalters 83 der Bodenplatte 5 eingeschraubt werden. Durch einen abgewinkelten Bereich der jeweiligen Kralle der Befestigungskralle 82 kommt die Unterseite des Schraubenkopfes zur Anlage an diesen abgewinkelten Bereich. Dies ist in Figur 5 dargestellt. Das heißt, dass in Figur 4 die Dachantenne 1 in ihrer Lage vorverrastet auf dem Dach 2 angeordnet war und jetzt ab dem weiteren Montageschritt, der in Figur 5 dargestellt ist, in ihre unverrückbare Lage auf dem Dach 2 durch die weiteren Verfahrensschritte von Figur 5 nach Figur 6 festgelegt werden kann. Wird nämlich ausgehend von der Montagelage, wie sie in Figur 5 dargestellt ist, die Befestigungsschraube 81 weiter in den Gegenhalter 83 der Bodenplatte 5 eingedreht, wird dabei die Befestigungskralle 82 axial in Richtung der Unterseite des Daches 2 (und auch gleichzeitig axial in Richtung der Unterseite der Bodenplatte 5) mitgenommen. Dies erfolgt soweit, bis die Anlagefläche der Rasthaken 88 an der Unterseite des Daches 2 zur Anlage kommen. Damit befindet sich die Befestigungsschraube 81 aber noch nicht in ihrer endgültigen Position. Denn durch weiteres Eindrehen der Befestigungsschraube 81 in den Gegenhalter 83 wird ein Krallenbereich 86, der von dem Gegenhalter 83 ausgeht, verformt und in einen Freiraum 89 des Gegenhalters 83 bewegt. Durch diesen Vorgang wird die Dachantenne 1 unverrückbar auf der Oberseite des Daches 2 angeordnet und festgelegt. Durch die Verformung des Krallenbereiches 86 in dem Freiraum 89 des Gegenhalters 83 können Toleranzen und vor allen Dingen unterschiedliche Dicken des Daches 2 ausgeglichen werden. Alternativ oder ergänzend dazu ist es möglich, durch die geometrische Abstimmung von Befestigungskralle 82 zu der inneren Geometrie des Gegenhalters 83 ein definiertes Anzugsmoment der Befestigungsschraube 81 einzustellen. Dadurch wird sichergestellt, dass die Dachantenne 1 mit solchen Kräften auf dem Dach 2 festgelegt ist, dass sie in einer unverrückbaren Lage gehalten wird, ohne dass Beschädigungen an den beteiligten Elementen, insbesondere innerhalb des Befestigungsmechanismus 8 oder gegebenenfalls auch an Teiles des Fahrzeuges, erfolgen.

In Figur 6 ist somit der letzte Montageschritt gezeigt, bei dem die Befestigungsschraube 81 soweit mit ihrem Innengewinde 84 in das Außengewinde 85 des Gegenhalters 83 eingedreht ist, dass die Bodenplatte 5 der Dachantenne 1 in ihrer Sollposition auf dem Dach 2 angeordnet und festgelegt ist. Dabei kann, muss aber nicht, der Krallenbereich 86 der Befestigungskralle 82 innerhalb des Freiraumes 89 des Gegenhalters 83 verformt worden sein. Für den Fall, dass das Ende der Befestigungsschraube 81 mit dem Außengewinde 85 aus dem Gegenhalter 3 nach dem Einschrauben herausragt, kann die planparallel auf Distanz zu der Bodenplatte 5 angeordnete Leiterplatte 4 eine korrespondierende Öffnung aufweisen. Auf jeden Fall ist in diesem Montageschritt, der in Figur 6 gezeigt ist, der Aufnahmebereich 87 der Befestigungskralle 82 durch den Kopf der Befestigungsschraube 81 ausgefüllt, sodass dadurch verhindert wird, dass sich die Endbereiche der Befestigungskralle 82 mit ihren Rasthaken 88 aus ihrer einmal eingenommenen Position wieder nach innen verlagern können, wie dies bei dem Montageschritt gemäß Figur 3 der Fall war. Insgesamt ist somit die Dachantenne 1 auch aufgrund der Verformung der Krallenbereiche 86 innerhalb des Freiraumes 89 des Gegenhalters 83 unter Vorspannung in vorteilhafter Weise festgelegt.

### Bezugszeichenliste:

- 1.: Dachantenne
- 2.: Dach
- 3.: Außenhäute
- 4.: Leiterplatte
- 5.: Bodenplatte
- 6.: Antennenrute
- 7.: Öffnung
- 8.: Befestigungsmechanismus
- 81.: Befestigungsschraube
- 82.: Befestigungskralle
- 83.: Gegenhalter
- 84.: Innengewinde
- 85.: Außen Gewinde
- 86.: Krallenbereich
- 87.: Aufnahmebereich
- 88.: Rasthaken
- 89.: Freiraum

## Patentansprüche

1. Dachantenne (1) mit einer Bodenplatte (5) und einer Außenhaube (3) zur Anordnung auf einem Dach (2) eines Fahrzeuges, wobei die Dachantenne (1) einen Befestigungsmechanismus (8) aufweist, der eine Befestigungsschraube (81) und eine damit zusammenwirkende Befestigungskralle (82) umfasst, wobei die Bodenplatte (5) einen Gegenhalter (83) bildet, an dem die Befestigungskralle (82) festgelegt ist, und die Befestigungskralle (82) einen Aufnahmebereich (87) für die Befestigungsschraube (81) bildet, **dadurch gekennzeichnet, dass** der Aufnahmebereich (87) vor dem Einsetzen der Befestigungsschraube (81) frei ist, sodass es möglich ist, die Befestigungskralle (82) zusammenzudrücken, und der Aufnahmebereich (87) nach dem Einsetzen der Befestigungsschraube (81) von dieser ausgefüllt ist, sodass die Befestigungskralle (82) sich nicht zusammendrücken lässt.

2. Dachantenne (1) nach Anspruch 1, **dadurch gekennzeichnet, dass** die Befestigungskralle (82) an einem offenen Ende des Aufnahmebereiches (87) zumindest einen Rasthaken (88) aufweist.

3. Dachantenne (1) nach Anspruch 2, **dadurch gekennzeichnet, dass** die Befestigungskralle (82) an einem offenen Ende des Aufnahmebereiches (87) zwei gegenüberliegend angeordnete Rasthaken (88) aufweist.

4. Dachantenne (1) nach einem der vorhergehenden Ansprüche, **dadurch gekennzeichnet, dass** der Gegenhalter (83) der Bodenplatte (5) einen Freiraum (89) zur Aufnahme eines Teiles der Befestigungskralle (82) bildet.

5. Antennenanordnung eines Fahrzeuges, aufweisend eine Dachantenne (1) gemäß eines des vorhergehenden Patentanspruches, wobei die Dachantenne (1) auf einem Dach (2) des Fahrzeuges mittels des Befestigungsmechanismus (8) angeordnet wird und festgelegt ist.

## Claims

1. Roof antenna (1) with a base plate (5) and an outer cover (3) for arranging on a roof (2) of a vehicle, the roof antenna (1) comprising a fastening mechanism (8) which comprises a fastening screw (81) and a fastening claw (82) which interacts with it, the base plate (5) forming a counterholder (83), on which the fastening claw (82) is fixed, and the fastening claw (82) forming a receiving region (87) for the fastening screw (81), **characterized in that** the receiving region (87) is free before the insertion of the fastening screw (81), with the result that it is possible for the fastening claw (82) to be compressed, and the receiving region (87) being filled by the fastening screw (81) after the insertion of the latter, with the result that the fastening claw (82) cannot be compressed.

2. Roof antenna (1) according to Claim 1, **characterized in that** the fastening claw (82) comprises at least one latching hook (88) at an open end of the receiving region (87) .

3. Roof antenna (1) according to Claim 2, **characterized in that** the fastening claw (82) comprises at least two latching hooks (88) arranged lying opposite one another at an open end of the receiving region (87).

4. Roof antenna (1) according to one of the preceding claims, **characterized in that** the counterholder (83) of the base plate (5) forms a clearance (89) for receiving a part of the fastening claw (82).

5. Antenna arrangement of a vehicle, comprising a roof antenna (1) according to one of the preceding patent claims, the roof antenna (1) being arranged and fixed on a roof (2) of the vehicle by means of the fastening mechanism (8).

## Revendications

1. Antenne de toit (1) comprenant une plaque de base (5) et un capot extérieur (3) afin d'être disposée sur un toit (2) d'un véhicule, l'antenne de toit (1) comportant un mécanisme de fixation (8) qui comprend une vis de fixation (81) et une griffe de fixation (82) coopérant avec celle-ci, la plaque de base (5) formant un contre-support (83) auquel est fixée la griffe de fixation (82) et la griffe de fixation (82) formant une zone de réception (87) destinée à la vis de fixation (81), **caractérisée en ce que** la zone de réception (87) est libre avant l'insertion de la vis de fixation (81) de sorte qu'il soit possible de comprimer la griffe de fixation (82) et la zone de réception (87) est remplie par la vis de fixation (81) après que celle-ci a été insérée de sorte que la griffe de fixation (82) ne puisse pas être comprimée.

2. Antenne de toit (1) selon la revendication 1, **caractérisée en ce que** la griffe de fixation (82) comporte au moins un crochet d'encliquetage (88) à une extrémité ouverte de la zone de réception (87).

3. Antenne de toit (1) selon la revendication 2, **caractérisée en ce que** la griffe de fixation (82) comporte deux crochets d'encliquetage (88) disposés face à face à une extrémité ouverte de la zone de réception (87).

4. Antenne de toit (1) selon l'une des revendications précédentes, **caractérisée en ce que** le contre-support (83) de la plaque de base (5) forme un espace libre (89) destiné à recevoir une partie de la griffe de fixation (82).

5. Ensemble formant antenne d'un véhicule, ledit ensemble comportant une antenne de toit (1) selon l'une des revendications précédentes, l'antenne de toit (1) étant disposée et fixée sur un toit (2) du véhicule à l'aide du mécanisme de fixation (8).
